# EUROPEAN PATENT APPLICATION

(11) **EP 4 711 221 A1**
(43) Date of publication of application: **18.03.2026**
(21) Application number: 24199891.3
(22) Date of filing: 12.09.2024
(51) Int. Cl.: B60T 13/74, B60T 7/04

(54) **REDUNDANT BRAKE ACTUATOR CONTROL AND SUPPLY INTERFACE USING DIFFERENT INPUT VOLTAGE LEVELS**

(71) Applicant: KB Intellectual Property GmbH & Co. KG, 82049 Pullach (DE)
(72) Inventor: SZABO, Gergely, 1125 Budapest (HU); URBAN, Matyas, 2638 Kemence (HU); LINDNER, Peter, 2300 Ráckeve (HU); TOTH-KATONA, Tamas, 1039 Budapest (HU); KOKREHEL, Csaba, 1119 Budapest (HU); HÖS, Levente, 1047 Budapest (HU); LÖRINCZI, Ottó Botond, 1038 Budapest (HU); SZABO, Janos, 1101 Budapest (HU); NEMETH, Huba, 1116 Budapest (HU)

(57) **Abstract**

An electronic control unit (ECU) for an actuator of an electro-mechanical brake for a commercial or transport vehicle comprises three electrical supply interfaces, wherein the three electrical supply interfaces comprise at least a main supply interface which operates on a first voltage level U1, wherein the main supply interface is in electrical communication with a main supply line (MSL, 10) which is configured to operate the brake actuator. The three electrical supply interfaces further comprise two secondary supply interfaces which operate on a second voltage level U2, wherein the two secondary supply interfaces respectively are in electrical communication with two secondary supply lines (SSL1, SSL2, 12) which are configured to operate at least one other component for an operation of the brake, particularly a component for the operation of a parking brake. The ECU further comprises two data communication interfaces which respectively are in data communication with two communication lines (CL1, CL2) which are respectively connected to two CAN RXITX circuits (CC1, CC2) to operate a CAN communication between the brake actuator and the vehicle. The main supply interface has a first power capability P1, and the two secondary supply interfaces have a second power capability P2.

## Description

The invention relates to an electric/electronic control unit (ECU) for an actuator of an electro-mechanical brake for a commercial or transport vehicle.

Brake-by-wire systems of transport vehicles or commercial vehicles comprise a new field of innovations. Brake-by-wire technology in the automotive industry is the ability to control brakes through electronic means, without a mechanical connection that transfers force to the physical braking system from a driver input apparatus. Electro-mechanical brakes are a specific type of a brake-by-wire system.

An electro-mechanical braking system is a type of braking system that uses electrical and mechanical components to slow or stop a vehicle. It does this by using an electric motor or actuator, instead of pneumatic or hydraulic pressure as in traditional braking systems, to apply the brakes. The electric motor receives braking commands from an electronic brake pedal control unit (ECU) by driver input or from other systems such as a central computer.

Since brake-by-wire systems typically have no mechanical linkages (i.e. particularly no pneumatic or hydraulic connections) that would provide a manual control over the brakes, they require a fail-operational redundancy, including e.g. redundant power supplies, sensors, and communication networks.

To this end, the new system architectures require a special hardware infrastructure. Until present day, commercial vehicle systems require compressed air and air treatment systems for the pneumatic brakes. However, in the future, the brake systems will be electrical, because of the legal environment and requirements, a better controllability, and a better efficiency. With using an electro-mechanical brake system, the compressor and the other air treatment and control equipment can be smaller and more efficient.

This technical situation encompasses the problem that commercial vehicles nowadays use electro-pneumatic or by-wire brake systems where the electronic part of the control is realised as a single circuit control. In case of malfunction of the control electronics, the driver can control the pneumatic part of the brake system by his/her foot because a two-circuit pneumatic backup system is still available.

In case of purely electric brake-by-wire systems, if the control and the electric power input have a failure, the brake system will not be able to give the required brake performance to stop or slow down the vehicle. So, in these cases, the concerned interfaces should be present redundantly to prevent the loss or non-operability of the brake system.

Since typically no pneumatic system is implemented into the braking system and the brake-by-wire system uses different voltage levels, the number of electrical connectors can be too big, for example because of or in view of the limited installation space.

Furthermore, the communication between the brake actuator and the vehicle should be redundant as well, because a communication loss can for example affect the stability of the vehicle. Here, for example, non-available or wrong wheel speed signals can cause a wrong ABS and ESP functionality.

Publication DE 102008009043 B3 shows a redundant brake system for a commercial vehicle. The system utilizes the parking brake integrated into an air supply unit as a redundant brake actuator. For axles not equipped with spring parking brake chambers, the control output of the trailer control module is used as pneumatic control input of the axle modulators.

Publication EP 3626559 A1 is about a redundant electro-pneumatic brake system, where the axle pressure modulators are equipped with redundant digital communication line towards a secondary brake control ECU. Moreover, these axle modulators do have redundant electric supply. This solution enables to control the redundant circuit electrically, so pneumatics can be eliminated from the cabin, and the redundant brake system can provide full ESP functionality as well.

Publication EP 2794368 A1 shows a redundant brake system for a commercial vehicle. The system utilizes the parking brake integrated into an air supply unit as a redundant brake actuator. For axles not equipped with spring parking brake chambers the air supply unit includes an additional electro-pneumatic modulator to generate control pressure for the pneumatic control input of the axle modulators.

Publication EP 2229302 A1 shows a redundant brake system for a commercial vehicle. The system utilizes pneumatic brake system as primary and an electro-mechanical system as redundant brake system. All axles are equipped with both types of brake actuators.

Publication EP 3938255 A1 describes a redundant brake system, where the electronic parking brake can drive the front axle modulator's backup port by using an inverting relay valve. Moreover, using a select high valve at the backup port, either the inverting relay, or the brake pedal's pneumatic backup circuit can control the backup port of the front axle modulator, so there is still pneumatics in the cabin.

Publication EP 3749558 A1 claims an electro-pneumatic redundant brake system, which uses wheel modulators having redundant pneumatic supply. To ensure circuit separation, another service brake circuit is introduced separated by a protection valve, and this circuit can act as redundant pneumatic supply for the electro-pneumatic wheel modules.

Publication EP 4116161 A1 is about a redundant brake system, which utilizes the electronic parking brake system as redundant brake system. The EPB module - which can be integrated into the air treatment unit - consists of a valve arrangement having two inverting and two non-inverting outputs to control the front and rear service brake modulator's backup ports, the front and rear parking brake actuators, and the trailer control module independently as well to implement a redundant electro-pneumatic brake system. The EPB module (and the primary brake control ECU) can receive brake demands directly from the foot brake module or from both autonomous driving ECUs.

Publication EP 3452346 A1 describes a redundant brake system, where the electronic parking brake can drive the rear axle parking brake chambers as a redundant brake circuit. Moreover, using a pneumatic booster valve the backup port of the front axle modulator can be controlled. By adding a bypass valve to this line either the foot brake module's pneumatic outlet port or the pneumatic outlet port of the booster can be connected to the backup port of the front axle modulator. But still, in this way pneumatics is still present in the cabin.

Publication EP 3600992 A1 describes a redundant brake system, where the electronic parking brake can drive the front axle modulator's backup port by using the trailer control module's pneumatic control outlet (yellow line). Moreover, using a select high valve at the backup port, either the inverting relay, or the brake pedal's pneumatic backup circuit can control the backup port of the front axle modulator, so there is still pneumatics in the cabin.

Publication EP 3600994 A1 describes a redundant brake system, where the electronic parking brake is integrated into the trailer control module to implement the redundant electro-pneumatic brake system for a CV.

Publication EP 4001031 A1 describes a brake system, where the electronic parking brake as a redundant brake system is equipped with dedicated yaw-rate, acceleration, and wheel-speed sensors to provide full ESP functionality by the redundant system as well. The parking brake module can control the front and rear spring brake actuators independently.

Publication EP 3787943 A1 claims a redundant electro pneumatic brake system, where all brake actuators are controlled by a wheel pressure modulator having redundant pneumatic supply. Therefore, a third independent service brake pneumatic circuit must be introduced to ensure circuit separation. All the wheel pressure modulators can receive brake demands from both autonomous driving ECUs.

It is an object of the present invention to overcome the above discussed problems that are present in the prior art and to provide a respectively improved brake system and particularly an improved electric/electronic control unit (ECU) for an actuator of an electro-mechanical brake system for a commercial or transport vehicle having suitable redundancy to reliably control the brake system of the vehicle.

According to the present invention, this aim is achieved by an electronic control unit (ECU) for an actuator of an electro-mechanical brake for a commercial or transport vehicle as defined by claim 1. Advantageous embodiments of the invention are defined by the dependent claims 2 to 14.

Accordingly, an electronic control unit (ECU) for an actuator of an electro-mechanical brake for a commercial or transport vehicle comprises three electrical supply interfaces, wherein the three electrical supply interfaces comprise at least a main supply interface which operates on a first voltage level U1, wherein the main supply interface is in electrical communication with a main supply line, wherein the main supply line is configured to operate the brake actuator.

Preferably, the three electrical supply interfaces further comprise two secondary supply interfaces which operate on a second voltage level U2, wherein the two secondary supply interfaces respectively are in electrical communication with two secondary supply lines, wherein the two secondary supply lines are configured to operate at least one other component for an operation of the brake, particularly a component for the operation of a parking brake.

The electronic control unit of the invention preferably further comprises two data communication interfaces, wherein the two data communication interfaces respectively are in data communication with two communication lines, wherein the two communication lines are configured to operate a CAN communication between the brake actuator and the vehicle. Herein, the two communication lines preferably are respectively connected to two CAN RX/TX circuits.

In the electronic control unit of the invention, preferably, the main supply interface has a first power capability P1, and the two secondary supply interfaces have a second power capability P2.

Thus, according to the invention, the electronic control unit for the brake actuator comprises three electrical supply interfaces and two data communication interfaces. Therein, the main supply interface uses a first voltage U1 and has a first power capability P1. The main supply interface or the main supply line, respectively, is responsible for the operation and performance of the brake actuator.

The other two electrical supply interfaces are secondary supply interfaces. They use a second voltage U2 and have a second power capability P2. The secondary supply interfaces or the secondary supply lines, respectively, are responsible for a basic operation of the brake, for example a parking brake operation.

The main and secondary supply interfaces are connected to each other via one or more switches.

The two communication interfaces are responsible to maintain a redundant CAN communication between the brake actuator and the vehicle.

With this architecture according to the invention, the brake actuator supply and communication interfaces are provided redundantly.

According to a further embodiment of the invention, the electronic control unit is configured such that the main supply line comprises a main supply line portion external to the ECU and a main supply line portion disposed within the ECU, and the electronic control unit comprises a first input switch, wherein the first input switch is configured to separate the external main supply line portion from the main supply line portion within the ECU.

According to a further embodiment of the invention, the electronic control unit is configured such that each of the two secondary supply lines comprises a secondary supply line portion external to the ECU and a joint secondary supply line portion disposed within the ECU, and the electronic control unit comprises a second input switch and a third input switch, wherein the second input switch is configured to separate one of the two external secondary supply line portions from the joint secondary supply line portion within the ECU, and wherein the third input switch is configured to separate the other of the two external secondary supply line portions from the joint secondary supply line portion within the ECU.

The electronic control unit of the invention may be further configured such that it comprises one or more of the following: a microcontroller unit (MCU), an inverter, one or more sensors, and a parking brake driver.

Herein, the electronic control unit may further comprise a first auxiliary power supply which is configured to generate a third voltage U3 for the MCU and/or the sensors and/or the CAN RX/TX circuits, if the secondary supply lines are available.

Furthermore, the electronic control unit may comprise a second auxiliary power supply which is configured to generate the second voltage U2 for the CAN RX/TX circuits and the third voltage U3 for the MCU and/or the sensors and/or the CAN RX/TX circuits, if the secondary supply lines are not available.

According to a further embodiment of the invention, the electronic control unit is configured such that it comprises a first bypass switch which is configured to maintain a bypass line if the main supply line is not available, wherein the voltage level of the first bypass switch is voltage U2 and the power capability is 2*P2. The electronic control unit may further comprise a second bypass switch which is configured to maintain a bypass line if the secondary supply lines are not available, wherein the voltage level of the second bypass switch is voltage U1, and wherein the power capability is a third power capability P3 which is the required power for the operation of the MCU and/or the sensors and/or the CAN RX/TX circuits.

Furthermore, the electronic control unit of the invention may comprise a separator switch which is configured to switch and separate the U3 voltage lines of the first and second auxiliary power supplies.

Besides, the invention also provides an electro-mechanical brake for a commercial or transport vehicle, wherein the brake comprises an electronic control unit according to the invention.

Further details and advantages of the invention will be explained in the following detailed description of an embodiment of the invention in combination with the attached drawing.

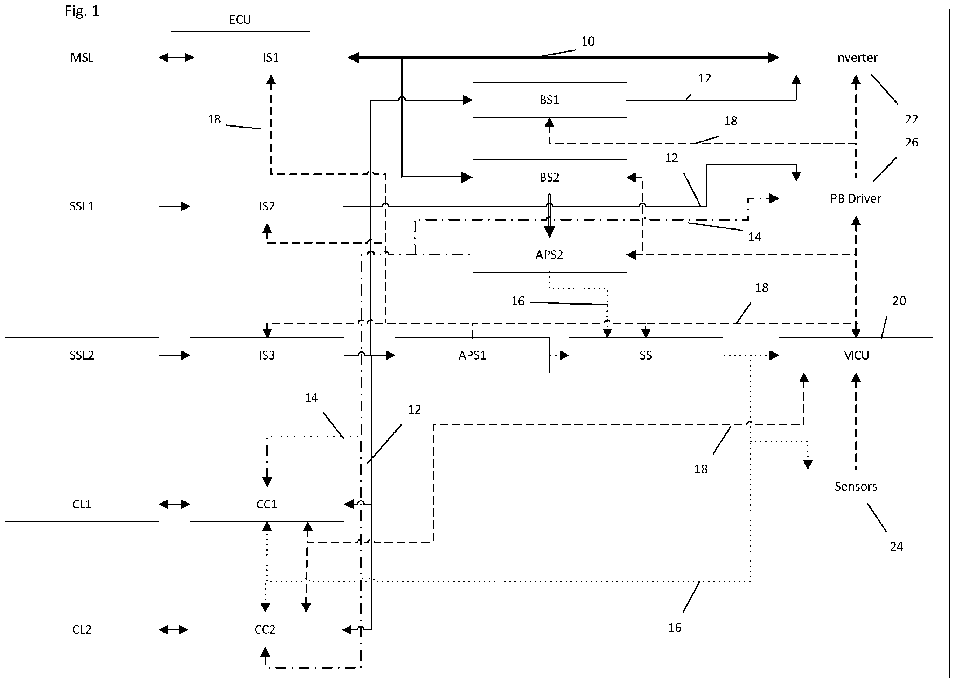

Fig. 1 shows an electric/electronic control unit (ECU) for an actuator of an electro-mechanical brake for a commercial or transport vehicle according to the invention.

Fig. 1 shows an electric/electronic control unit (ECU) for an actuator of an electro-mechanical brake. This ECU has three electrical supply interfaces and two data communication interfaces, as is explained in the following.

Herein, the three electrical supply interfaces comprise a main supply interface which connects an external main supply line MSL to the ECU which comprises an internal main supply line 10 (double/bold black line in Fig. 1). The main supply interface uses a first voltage U1, i.e. operates on a first voltage level U1, and has a first power capability P1. The power capability means the maximum electric power that the power line/switch can handle. Accordingly, the main supply lines MSL and 10 have the voltage level U1 and the power capability P1. The main supply lines MSL and 10 are in electrical communication with the brake actuator and are responsible for the operation and performance of the brake actuator. The external main supply line MSL can be separated from the ECU with a first input switch IS1.

The other two electrical supply interfaces are secondary supply interfaces which respectively connect a first external secondary supply line SSL1 and a second external secondary supply line SSL2 to the ECU which comprises an internal secondary supply line 12 (solid black line in Fig. 1). The two secondary supply interfaces use a second voltage U2, i.e. operate on a second voltage level U2, and have a second power capability P2. Accordingly, the secondary supply lines SSL1, SSL2 and 12 have the voltage level U2 and the power capability P2. The secondary supply lines are in electrical communication with at least one other component for a basic operation of the brake, i.e. they are responsible for a basic operation of the brake, for example a parking brake operation. The external secondary supply lines SSL1, SSL2 can respectively be separated from the ECU with second and third input switches IS2 and IS3.

The two data communication interfaces respectively connect a first external communication line CL1 and a second external communication line CL2 to the ECU. The two data communication interfaces are responsible to maintain a redundant CAN communication between the brake actuator and the vehicle. Accordingly, communication lines CL1 and CL2 are the CAN lines. These lines are respectively connected to two separated so-called CAN RX/TX circuits CC1 and CC2. These two lines are needed to maintain a redundant communication. (Generally, it is known that in a Controller Area Network (CAN) a transmit line from a controller to a transceiver is called CAN TX, and that the receive line is called CAN RX).

The ECU further comprises a microcontroller unit (MCU) 20 which is responsible for the control of different sub-circuits of the ECU, such as an inverter 22, auxiliary power supplies APS1, APS2, the input switches IS1, IS2, IS3, and bypass switches BS1, BS2. The ECU further comprises and/or is connected to one or more sensors 24, which, e.g., collect data that are relevant for the braking process, such as wheel speeds, etc.

A first auxiliary power supply APS1 is responsible to create a third voltage U3 for the MCU 20, the sensors 24 and the CAN RX/TX circuits CC1, CC2 if the secondary supply lines SSL1, SSL2, 12 are available.

A second auxiliary power supply APS2 is responsible to create the second voltage U2 for the CAN RX/TX circuits CC1, CC2 and the third voltage U3 for the MCU 20, the sensors 24 and the CAN RX/TX circuits CC1, CC2 if the secondary supply lines SSL1, SSL2, 12 are not available. Accordingly, Fig. 1 shows the internal secondary supply line 14 (black dash dot line in Fig. 1) for the second voltage U2 and the supply lines 16 (black dotted line in Fig. 1) for the third voltage U3.

A first bypass switch BS1 is responsible for maintaining a bypass line if the main supply line MSL, 10 is not available. The voltage level of this switch is voltage U2, and the power capability is 2*P2. With these values the actuator is able to move with reduced dynamics to reach a basic performance in case of an emergency.

A second bypass switch BS2 is responsible for maintaining a bypass line if the secondary supply lines SSL1, SSL2, 12 are not available. The voltage level of this switch is voltage U1, and the power capability is a third power capability P3. P3 is the required power for the working of the MCU 20, the sensors 24 and the CAN RX/TX circuits CC1, CC2.

The ECU further comprises a separator switch SS which is responsible for the switching and separation of the U3 voltage lines 16 of the auxiliary power supplies APS1, APS2. This separator switch SS is needed to maintain the voltage drop as low as possible, because the U3 voltage shall be stable and the level boundaries are small.

The input switches IS1, IS2, IS3 are needed for a circuit separation if any failure happens. With these switches, the ECU can stop the failure propagation to the other subcircuits or to the vehicle. The input switches IS1, IS2, IS3 contain over-voltage and under-voltage protection functions and an over-current protection as well as an over-temperature protection.

The above-described switches serve to connect the main supply interface and the secondary supply interfaces to each other, as required and as described in this disclosure.

The ECU further comprises and/or is connected to a parking brake (PB) driver 26 which is responsible for operating the parking brake. This PB driver uses the U2 voltage.

The above-described components of the ECU are interconnected, as required, by communication/data lines 18 (black dash line in Fig. 1), as shown in Fig. 1.

In case of a normal operation, the main supply line MSL, 10 is responsible to provide power for an electric motor which is driving the brake actuator to fulfill the force and dynamic requirements. The secondary supply lines SSL1, SSL2, 12 are responsible to provide power for the communication and control circuits (auxiliary power supply APS1, MCU 20, sensors 24, CAN RX/TX circuits CC1, CC2). The bypass switches BS1, BS2 are normally open which means in this case that no current is flowing through on these switches. In this case, the actuator will operate with full functionality.

In case of a failure of the main supply line MSL, 10, after the MCU 20 has recognized that the supply line has a failure, the input switch IS1 will be opened (i.e. deactivated) so that the main supply line MSL, 10 will not be available. After the input switch IS1 has been disabled, the MCU 20 will activate the bypass switch BS1 and provide U2 voltage and P1 +P2 power for the inverter 22. In this case, the actuator will be able to work with reduced functionality.

In case that one of the secondary supply lines SSL1, SSL2, 12 has a failure, nothing will happen if the secondary supply lines SSL1, SSL2 are coming on a redundant way from the vehicle. In this case, the ECU will be working like in a normal operation.

In a case where the secondary supply lines SSL1, SSL2 are not coming on a redundant way from the vehicle, and the secondary supply lines have a failure, after the MCU 20 has recognized that the secondary supply lines have a failure, the input switches IS2, IS3 will be opened (i.e. deactivated) so that the secondary supply lines SSL1, SSL2, 12 will not be available. After the input switches IS2, IS3 have been disabled, the MCU 20 will activate the bypass switch BS2 and provide U1 voltage and P3 power to the auxiliary power supply APS2. The auxiliary power supply APS2 will create U2 and U3 voltages for maintaining the communication and control functions. In this case, the actuator will be able to work with full functionality.

The attached drawing (Fig. 1) schematically shows in various types of drawing lines (solid lines, broken lines, dotted lines, chain dotted lines, etc.) the various kinds of electric supply lines 10, 12, 14, 16 and communication/data lines 18 that interconnect the components of the ECU and that are provided to accomplish the required functions of the ECU of the actuator of the brake system, as above described. Thus, additional features and functions of the ECU of the brake system, which are not explicitly discussed in this specification, but which are part of the present disclosure, become evident from the drawing.

### LIST OF REFERENCE SIGNS

- 10: main supply line (U1 voltage)
- 12: secondary supply line (U2 voltage)
- 14: internal secondary supply line (U2 voltage)
- 16: supply line (U3 voltage)
- 18: communication/data lines

- 20: microcontroller unit (MCU)
- 22: inverter
- 24: sensors
- 26: parking brake driver

- MSL: external main supply line
- IS1: first input switch
- U1: first voltage
- P1: first power capability

- SSL1: first external secondary supply line
- SSL2: second external secondary supply line
- IS2: second input switch
- IS3: third input switch
- U2: second voltage
- P2: second power capability

- CL1: first external communication line
- CL2: second external communication line
- CC1: CAN RX/TX circuit
- CC2: CAN RX/TX circuit

- APS1: first auxiliary power supply
- APS2: second auxiliary power supply
- BS1: first bypass switch
- BS2: second bypass switch
- SS: separator switch
- U3: third voltage
- P3: third power capability

## Claims

1. Electronic control unit (ECU) for an actuator of an electro-mechanical brake for a commercial or transport vehicle, **characterized in that** it comprises three electrical supply interfaces, wherein the three electrical supply interfaces comprise at least a main supply interface which operates on a first voltage level U1, wherein the main supply interface is in electrical communication with a main supply line (MSL, 10), wherein the main supply line (MSL, 10) is configured to operate the brake actuator.

2. Electronic control unit according to claim 1, **characterized in that** the three electrical supply interfaces comprise two secondary supply interfaces which operate on a second voltage level U2, wherein the two secondary supply interfaces respectively are in electrical communication with two secondary supply lines (SSL1, SSL2, 12), wherein the two secondary supply lines (SSL1, SSL2, 12) are configured to operate at least one other component for an operation of the brake, particularly a component for the operation of a parking brake.

3. Electronic control unit according to claim 1 or claim 2, **characterized in that** it comprises two data communication interfaces, wherein the two data communication interfaces respectively are in data communication with two communication lines (CL1, CL2), wherein the two communication lines (CL1, CL2) are configured to operate a CAN communication between the brake actuator and the vehicle.

4. Electronic control unit according to claim 3, **characterized in that** the two communication lines (CL1, CL2) are respectively connected to two CAN RX/TX circuits (CC1, CC2).

5. Electronic control unit according to any one of claims 2 to 4, **characterized in that** the main supply interface has a first power capability P1, and **in that** the two secondary supply interfaces have a second power capability P2.

6. Electronic control unit according to any one of the preceding claims, **characterized in that**
- the main supply line comprises a main supply line portion (MSL) external to the ECU and a main supply line portion (10) disposed within the ECU, and
- the electronic control unit comprises a first input switch (IS1),
- wherein the first input switch (IS1) is configured to separate the external main supply line portion (MSL) from the main supply line portion (10) within the ECU.

7. Electronic control unit according to any one of the preceding claims, **characterized in that**
- each of the two secondary supply lines comprises a secondary supply line portion (SSL1, SSL2) external to the ECU and a joint secondary supply line portion (12) disposed within the ECU, and
- the electronic control unit comprises a second input switch (IS2) and a third input switch (IS3),
- wherein the second input switch (IS2) is configured to separate one of the two external secondary supply line portions (SSL1) from the joint secondary supply line portion (12) within the ECU, and
- wherein the third input switch (IS3) is configured to separate the other of the two external secondary supply line portions (SSL2) from the joint secondary supply line portion (12) within the ECU.

8. Electronic control unit according to any one of the preceding claims, **characterized in that** it comprises one or more of the following: a microcontroller unit (MCU) (20), an inverter (22), one or more sensors (24), and a parking brake driver (26).

9. Electronic control unit according to claim 8, **characterized in that** it comprises a first auxiliary power supply (APS1) which is configured to generate a third voltage U3 for the MCU (20) and/or the sensors (24) and/or the CAN RX/TX circuits (CC1, CC2), if the secondary supply lines (SSL1, SSL2, 12) are available.

10. Electronic control unit according to claim 9, **characterized in that** it comprises a second auxiliary power supply (APS2) which is configured to generate the second voltage U2 for the CAN RX/TX circuits (CC1, CC2) and the third voltage U3 for the MCU (20) and/or the sensors (24) and/or the CAN RX/TX circuits (CC1, CC2), if the secondary supply lines (SSL1, SSL2, 12) are not available.

11. Electronic control unit according to any one of the preceding claims, **characterized in that** it comprises a first bypass switch (BS1) which is configured to maintain a bypass line if the main supply line (MSL, 10) is not available, wherein the voltage level of the first bypass switch (BS1) is voltage U2 and the power capability is 2*P2.

12. Electronic control unit according to any one of the preceding claims, **characterized in that** it comprises a second bypass switch (BS2) which is configured to maintain a bypass line if the secondary supply lines (SSL1, SSL2, 12) are not available, wherein the voltage level of the second bypass switch (BS2) is voltage U1, and wherein the power capability is a third power capability P3 which is the required power for the operation of the MCU (20) and/or the sensors (24) and/or the CAN RX/TX circuits (CC1, CC2).

13. Electronic control unit according to any one of claims 9 to 12, **characterized in that** it comprises a separator switch (SS) which is configured to switch and separate the U3 voltage lines (16) of the first and second auxiliary power supplies (APS1, APS2).

14. Electro-mechanical brake for a commercial or transport vehicle, **characterized in that** it comprises an electronic control unit (ECU) according to any one of the preceding claims.
